# EUROPEAN PATENT APPLICATION

(11) **EP 4 364 578 A1**
(43) Date of publication of application: **08.05.2024**
(21) Application number: 22831961.2
(22) Date of filing: 27.06.2022
(51) Int. Cl.: A23G 3/56, A23G 3/54, A23G 3/50, A23G 3/00, A23G 1/50, A23G 1/54, A23L 7/10

(54) **SNACK FOOD**

(30) Priority: 02.07.2021 CN 202110751217
(71) Applicant: WM. Wrigley Jr. Company, Chicago, IL 60642 (US)
(72) Inventor: FENG, Yushi, Guangzhou, Guangdong 510730 (CN); ZHANG, Jing, Guangzhou, Guangdong 510730 (CN); XIN, Liying, Guangzhou, Guangdong 510730 (CN)
(74) Representative: Haseltine Lake Kempner LLP
(86) International application number: PCT/CN2022/101509
(87) International publication number: WO 2023/274147

(57) **Abstract**

The present invention relates to the field of foods, and provides a snack food. The snack food comprises a bar-like body and a food portion wrapped at one end of the bar-like body; the food portion comprises at least one type of chopped nuts, chopped grains, and chopped dried fruit; and the food portion is bound into a solid body by means of a food binder. The present invention breaks a traditional concept in the food industry, a nut food is innovatively applied to a bar-like body to manufacture the food into a lollipop shape, and the food portion can be stably fixed on the bar-like body by means of a special structure of a fixing end of the bar-like body. Moreover, a consumer can eat the food without touching the food portion with a hand of the consumer, which is convenient and fast. The proportions of the nuts, grains, and/or fruit in the present invention is greater than half of the weight of the food portion; thus, the food has rich nutrition, would not cause excess sugar intake, and is a snack food suitable for consumers of all ages.

## Description

### Technical Field

The present invention relates to the technical field of foods, in particular to a snack food.

### Background Art

Lollipop is formed by fixing a candy on a bar-like body, which increases the interestingness while tasting the candy, and lollipop is hygienic because hands do not touch the candy directly. Lollipop is loved in everyday life by people of all ages.

Nut snacks are usually prepared in the form of whole fruits or nut bars prepared by binding chopped nuts by means of a binder. However, there are no snacks prepared from nut bars in the form of lollipop on the market because chopped nuts have no stickiness, the structure formed after the chopped nuts are bound and fixed by means of the binder is usually unstable, and if the structure is fixed on a bar-like body, the chopped nuts are easy to loose and fall off, which is not convenient to eat and transport. However, the nut bar without the bar-like body needs to be grasped directly by hand, which is not hygienic enough and is easy to contaminate by bacteria.

Therefore, in order to overcome the foregoing problems, the inventors of the present invention provide a snack food. The snack food is mainly composed of chopped nuts, chopped grains, and chopped dried fruit, and is provided on the bar-like body, which not only increases the interestingness of eating, but also achieves health and hygiene.

### Summary of the Invention

The present invention aims to solve at least one type of the technical problems in the prior art.

The present invention mainly aims to present foods such as chopped nuts in the form of lollipop, health and hygiene are ensured while the food integrity is ensured, and the interestingness is achieved.

In order to achieve the objective, the present invention provides a snack food, wherein the snack food comprises a bar-like body and a food portion wrapped at one end of the bar-like body; the food portion comprises at least one type of chopped nuts, chopped grains, and chopped dried fruit; and the food portion is bound into a solid body by means of a food binder.

In the present invention, at least one type of chopped nuts, chopped grains, and chopped dried fruit are innovatively bound into a solid body by means of a food binder, and the solid body is wrapped on a special bar-like body 2, so that a consumer can grasp to eat by hand, which is clean and hygienic, and the interestingness of eating is achieved.

In a preferred example, nuts in the chopped nuts comprise at least one type of almonds, walnuts, peanuts, seeds, hazelnuts, cashew nuts, macadamia nuts, pine nuts, and sesame.

In a preferred example, the particle size of the chopped nuts is 1 mm to 5 mm.

In a preferred example, grains in the chopped grains comprise at least one type of rice, millet, wheat, buckwheat, oats, coix seeds, beans, and corns.

In a preferred example, the particle size of the chopped grains is 1 to 3 mm.

In a preferred example, dried fruit in the chopped dried fruit comprise at least one type of raisins, dried cranberries, dried strawberries, dried mangoes, dried kiwifruits, and dried apples.

In a preferred example, the particle size of the chopped dried fruit is not greater than 5 mm.

The particle size of the chopped nuts, the chopped grains and the chopped dried fruit is strictly controlled so as to effectively reduce the risk of asphyxia during eating, and the controllability and surface evenness of the shape of the food portion can be ensured while the taste of chewing is maintained.

In a preferred example, a coating is applied to a surface of the food portion, so as to reduce the degree of oxidation of the chopped nuts, the chopped grains and/or the chopped dried fruit and further increase the integrity of the food portion.

In a preferred example, the coating is prepared from chocolate or yogurt.

In a preferred example, the coating is prepared by mixing composite white chocolate and strawberry powder.

In a preferred example, the coating is prepared by mixing composite white chocolate, yogurt powder and citric acid.

In a preferred example, the viscosity of the coating is less than 1500 cps, so as to facilitate demolding during production and provide good taste during eating.

In a preferred example, the coating is fully or partially wrapped on the food portion; when the coating is fully wrapped on the food portion, the maximum anti-oxidation effect can be achieved; when the food portion accidentally falls or is transported, the fully-wrapped coating can ensure the integrity of the food portion to the maximum extent, the food portion is not prone to breaking, and sales are not affected; when the coating is partially wrapped on the food portion, the food portion can be wrapped, so as to achieve the effects of avoiding oxidation and ensuring the food integrity, coating materials can be saved, and a unique shape is provided.

In a preferred example, the coating is semi-wrapped on the food portion, or the strip-shaped coating is wrapped on the food portion at intervals.

In a preferred example, the food binder uses syrup or honey, which enables the food portion to achieve a soft texture while providing good food stickiness, and especially for children, the food portion is easy to chew and good to eat.

In a preferred example, the radial dimension of the food portion is 40 mm to 45 mm. Multiple tests can verify that when the radial dimension of the food portion is selected within this range, the food portion is easy to demold during production, and the integrity can be better maintained during transportation.

In a preferred example, the cross section of the food portion is circular, square, triangular, or elliptical.

In a preferred example, the bar-like body is of a flat bar structure, one end thereof is configured to be a fixing end connected to the food portion, and the other end is configured to be a grasping end.

In a preferred example, the thickness direction of the bar-like body is consistent with the thickness direction of the food portion, and the maximum radial dimension of the fixing end of the bar-like body is less than the maximum radial dimension of the food portion.

In a preferred example, the grasping end is triangular.

In a preferred example, the fixing end has a hollow portion, which facilitates fixing the food portion.

In a preferred example, one hollow portion is provided, and the hollow portion is circular.

In a preferred example, at least two hollow portions are provided, and the shapes of a plurality of hollow portions are combined into a pattern.

In summary, the present invention has the beneficial effects that: the present invention breaks a traditional concept in the food industry, a nut food is innovatively applied to a bar-like body to manufacture the food into a lollipop shape, and the food portion can be stably fixed on the bar-like body by means of a special structure of a fixing end of the bar-like body; moreover, a consumer can eat the food without touching the food portion with a hand of the consumer, which is convenient and fast. The proportions of the nuts, grains, and/or fruit in the present invention is greater than half of the weight of the food portion; thus, the food has rich nutrition, would not cause excess sugar intake, and is a snack food suitable for consumers of all ages.

The additional aspects and advantages of the present invention will become apparent in the following description, or will be known through the practice of the present invention.

### Description of Drawings

The foregoing and/or additional aspects and advantages of the present invention will become apparent and easy to understand from the description of the examples with reference to the following drawings, wherein:
FIG. 1 is a front view of the first example of the present invention.
FIG. 2 is a side view of the first example of the present invention.
FIG. 3 is a front view of the second example of the present invention.
FIG. 4 is a front view of the third example of the present invention.
FIG. 5 is a front view of the fourth example of the present invention.
FIG. 6 is a side view of the fifth example of the present invention.
FIG. 7 is a structural schematic diagram of a bar-like body.

Reference number: 10-snack food; 1-food portion; 2-bar-like body; 21-fixing end; 211-hollow portion; 22-grasping end; 23-connecting rod; 3-coating.

### Specific Embodiments

In order to clearly understand the objectives, features and advantages of the present invention, the present invention is further described in detail below with reference to the drawings and the specific embodiments. It should be noted that the features of the same examples and different examples of the present application may be combined with one another without conflict.

Many specific details are described in the following description so as to fully understand the present invention. However, the present invention may also be implemented in other ways different from those described herein. Therefore, the scope of protection of the present invention is not limited by the specific examples disclosed below.

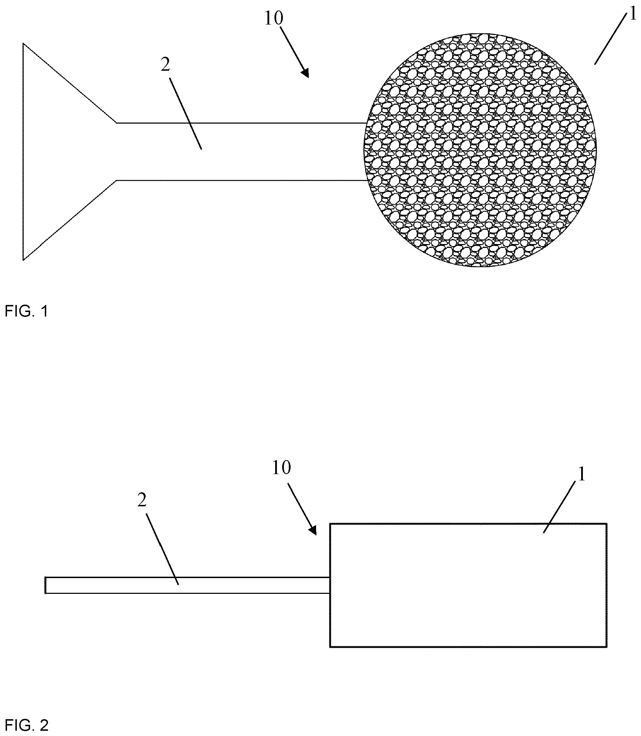

A snack food 10 provided according to the first example of the present invention is described below with reference to figures 1 and 2. The snack food 10 comprises a bar-like body 2 and a food portion 1 wrapped at one end of the bar-like body 2; the food portion comprises at least one type of chopped nuts, chopped grains, and chopped dried fruit; and the food portion is bound into a solid body by means of a food binder.

Usually, at least one type of chopped nuts, chopped grains, and chopped dried fruit are difficult to firmly wrap on the bar-like body. Therefore, the chopped nuts prepared into the bar-like body to be eaten are sold on the market. In the present invention, at least one type of chopped nuts, chopped grains, and chopped dried fruit are innovatively bound into a solid body by means of a food binder, and the solid body is wrapped on a special bar-like body 2, so that a consumer can grasp to eat by hand, which is clean and hygienic, and the interestingness of eating is achieved.

Preferably, the weight of the chopped nuts, the chopped grains and/or the chopped dried fruit should account for at least 51% of the total weight of the food portion, so that nutrient-dense components predominate in a formula.

In a preferred example, nuts in the chopped nuts may comprise at least one type of almonds, walnuts, peanuts, seeds, hazelnuts, cashew nuts, macadamia nuts, pine nuts, and sesame, but are not limited thereto.

The particle size of the chopped nuts is about 1 mm to 5 mm, and the chopped nuts of different particle sizes can be prepared according to the difference in the characteristics of nuts.

In a preferred example, grains in the chopped grains may comprise at least one type of rice, millet, wheat, buckwheat, oats, coix seeds, beans, and corns, but are not limited thereto. The grains may also comprise processed chopped grains, such as crispy rice and the like.

The particle size of the chopped grains is about 1 to 3 mm, and the chopped grains of different particle sizes can be prepared according to the difference in the characteristics of grains.

In a preferred example, dried fruit in the chopped dried fruit may comprise at least one type of raisins, dried cranberries, dried strawberries, dried blueberries, dried mangoes, dried kiwifruits, and dried apples, but are not limited thereto.

The particle size of the chopped dried fruit should not be greater than 5 mm, and the chopped dried fruit of different particle sizes can be prepared according to the difference in the characteristics of chopped dried fruit.

The particle size of the chopped nuts, the chopped grains and the chopped dried fruit is strictly controlled so as to effectively reduce the risk of asphyxia during eating, and the controllability and surface evenness of the shape of the food portion can be ensured while the taste of chewing is maintained.

Furthermore, the food portion may be added with vanilla and natural spices, so as to increase the flavor of the product. It should be noted that the present invention does not contain artificial spices, artificial colors and preservatives, and does not use trans fats, which is favorable for the health of consumers.

In a preferred example, the food binder uses a soft sticky material, such as syrup or honey, which enables the food portion to achieve a soft texture while providing good food stickiness, and especially for children, the food portion is easy to chew and good to eat.

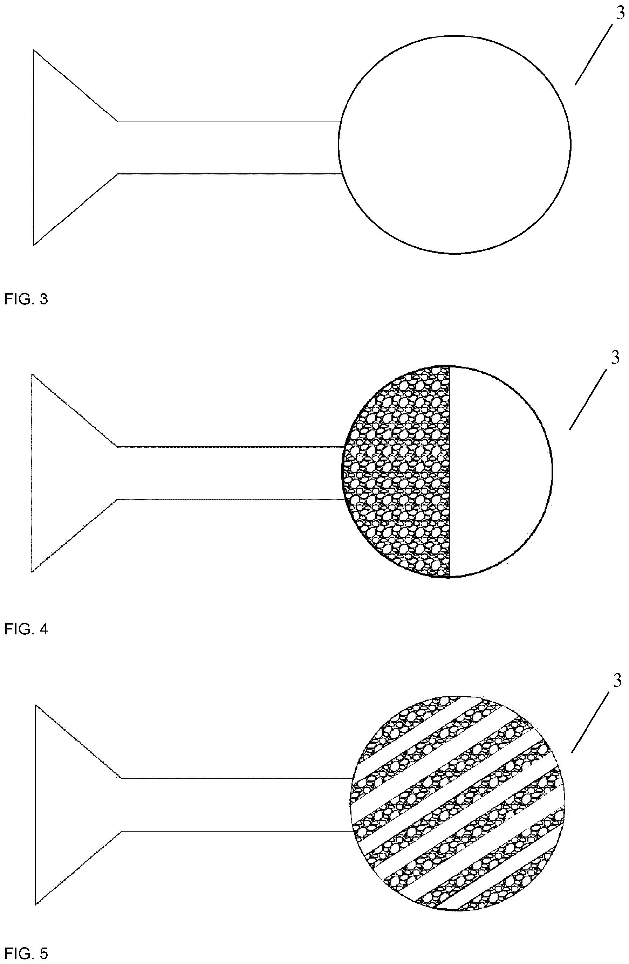

Furthermore, as shown in figure 3 to figure 5, in order to reduce the degree of oxidation of the chopped nuts, the chopped grains and/or the chopped dried fruit and further increase the integrity of the food portion, in a preferred example, a coating 3 may be applied to a surface of the food portion of the present invention.

The coating may be prepared from chocolate or yogurt. The chocolate may be selected from black chocolate, white chocolate, strawberry chocolate, matcha chocolate and the like. In one example, the coating may be prepared by mixing composite white chocolate and strawberry powder, thereby providing a strawberry-flavored coating. In another example, the coating may be prepared by mixing composite white chocolate, yogurt powder and citric acid, so as to increase rich taste.

Preferably, the viscosity of the coating should be controlled to be less than 1500 cps, so as to facilitate demolding during production and provide good taste during eating.

As shown in figure 3, in the second example of the present invention, the coating may be fully wrapped on the food portion, i.e., the coating is wrapped on two surfaces of the food portion and a side surface connected between the two surfaces, so that the maximum anti-oxidation effect is achieved; when the food portion accidentally falls or is transported, the fully-wrapped coating can ensure the integrity of the food portion to the maximum extent, the food portion is not prone to breaking, and sales are not affected.

Furthermore, the coating may also be partially wrapped on the food portion mainly for cost reasons. In the third example of the present invention, the coating 3 is semi-wrapped (as shown in figure 4, only half of the food portion is wrapped). In the fourth example of the present invention, the coating 3 is wrapped at intervals (as shown in figure 5, the strip-shaped coating is wrapped on the food portion at intervals). When the coating is partially wrapped on the food portion, the food portion can be wrapped, so as to achieve the effects of avoiding oxidation and ensuring the food integrity, coating materials can be saved, and a unique shape is provided.

In order to facilitate eating the food portion, especially for children, the radial dimension of the food portion is preferably 40 mm to 45 mm. Multiple tests can verify that when the radial dimension of the food portion is selected within this range, the food portion is easy to demold during production, and the integrity can be better maintained during transportation.

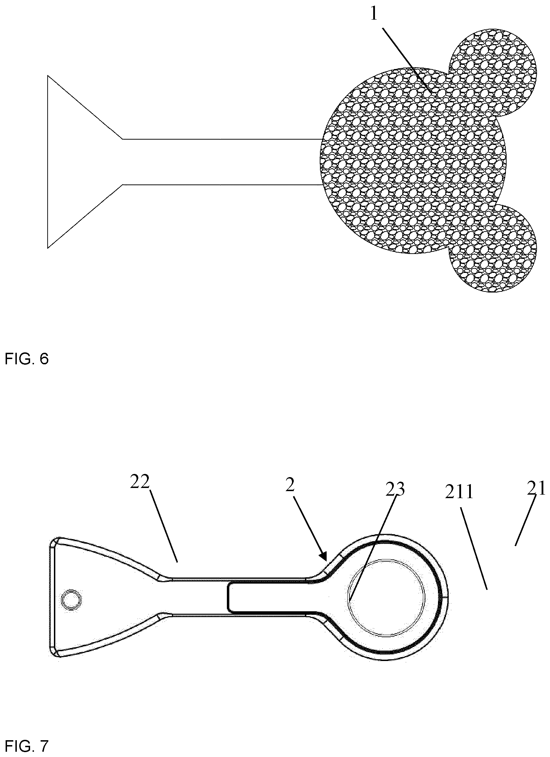

In a preferred example, the food portion of the present invention may be in various shapes, for example, the cross section is circular, square, triangular or in an irregular animal shape, such as a Mickey shape (as shown in figure 6, two smaller circles are symmetrically connected to an upper portion of a larger circle), or an elephant shape, so as to bring a good visual feel and interestingness of eating to consumers.

The bar-like body 2 is of a flat bar structure, one end thereof is configured to be a fixing end connected to the food portion 1, the other end is configured to be a grasping end 22, and a connecting rod 23 is arranged between the fixing end 21 and the grasping end 22. The width of the fixing end 21 is greater than the width of the connecting rod 23, and the fixing end 21 has a hollow portion 211 that facilitates binding the food portion through the hollow portion 211, thereby facilitating fixing the food portion.

Preferably, one hollow portion 211 is provided, and is of a circular hollow structure, which is convenient to manufacture, and ensures the binding stability of the food portion. Of course, the shape of the hollow portion 211 is not limited thereto.

More preferably, at least two hollow portions 211 are provided, and a plurality of hollow portions may form a specific pattern, such as a smiling face pattern, so that a consumer can see the pattern of the hollow portions after use, which increases the interestingness.

Preferably, the thickness direction of the bar-like body 2 is consistent with the thickness direction of the food portion, and the maximum radial dimension of the fixing end of the bar-like body 2 is less than the maximum radial dimension of the food portion 1, so that the bar-like body 2 is not exposed to the food portion 1.

Furthermore, the grasping end 22 is generally triangular, which is convenient to grasp by the consumer, especially for children.

In summary, the present invention has the beneficial effects that: the present invention breaks a traditional concept in the food industry, a nut food is innovatively applied to a bar-like body to manufacture the food into a lollipop shape, and the food portion can be stably fixed on the bar-like body by means of a special structure of a fixing end of the bar-like body; moreover, a consumer can eat the food without touching the food portion with a hand of the consumer, which is convenient and fast. The proportions of the nuts, grains, and/or fruit in the present invention is greater than half of the weight of the food portion; thus, the food has rich nutrition, would not cause excess sugar intake, and is a snack food suitable for consumers of all ages.

In the description of the present invention, the term "a plurality of" means two or more than two, and unless otherwise defined, the orientation or position relationship indicated by the terms "up", "down", etc. is based on the orientation or position relationship shown in the drawings, only for conveniently describing the present invention and simplifying the description, rather than for indicating or implying that the devices or elements mentioned must have specific orientation or be constructed and operated by specific orientation, so that it shall not be understood as the limitation to the present invention. The terms "connected", "mounted", "fixedly connected", etc. should be understood in a broad sense, for example, the connection may be a fixing connection, a detachable connection, or an integral connection; or the connection may be a direct connection or an indirect connection by using an intermediary. A person of ordinary skill in the art may understand the specific meanings of the foregoing terms in the present invention according to specific situations.

In the description of this specification, the description of the terms "an example," "some examples," "specific examples," etc. means that the specific features, structures, materials or characteristics described with reference to the example are contained in at least one example of the present invention. In this specification, the illustrative expression of the foregoing terms does not necessarily refer to the same example. Moreover, the specific features, structures, materials or characteristics described may be combined appropriately in any one or more of examples.

The above descriptions are merely preferred examples of the present invention and are not intended to limit the present invention. For a person skilled in the art, the present invention may have various modifications and changes. Any modification, equivalent replacement or improvement made without departing from the spirit and principle of the present invention shall fall within the scope of protection of the present invention.

## Claims

1. A snack food, wherein the snack food comprises a bar-like body and a food portion wrapped at one end of the bar-like body; the food portion comprises at least one type of chopped nuts, chopped grains, and chopped dried fruit; and the food portion is bound into a solid body by means of a food binder.

2. The snack food according to Claim 1, wherein nuts in the chopped nuts comprise at least one type of almonds, walnuts, peanuts, seeds, hazelnuts, cashew nuts, macadamia nuts, pine nuts, and sesame.

3. The snack food according to Claim 1, wherein the particle size of the chopped nuts is 1 mm to 5 mm.

4. The snack food according to Claim 1, wherein grains in the chopped grains comprise at least one type of rice, millet, wheat, buckwheat, oats, coix seeds, beans, and corns.

5. The snack food according to Claim 1, wherein the particle size of the chopped grains is 1 to 3 mm.

6. The snack food according to Claim 1, wherein dried fruit in the chopped dried fruit comprise at least one type of raisins, dried cranberries, dried strawberries, dried mangoes, dried kiwifruits, and dried apples.

7. The snack food according to Claim 1, wherein the particle size of the chopped dried fruit is not greater than 5 mm.

8. The snack food according to Claim 1, wherein a coating is applied to a surface of the food portion.

9. The snack food according to Claim 8, wherein the coating is prepared from chocolate or yogurt.

10. The snack food according to Claim 8, wherein the coating is prepared by mixing composite white chocolate and strawberry powder.

11. The snack food according to Claim 8, wherein the coating is prepared by mixing composite white chocolate, yogurt powder and citric acid.

12. The snack food according to Claim 8, wherein the viscosity of the coating is less than 1500 cps.

13. The snack food according to Claim 8, wherein the coating is fully or partially wrapped on the food portion.

14. The snack food according to Claim 13, wherein the coating is semi-wrapped on the food portion, or the strip-shaped coating is wrapped on the food portion at intervals.

15. The snack food according to Claim 1, wherein the food binder uses syrup or honey.

16. The snack food according to Claim 1, wherein the radial dimension of the food portion is 40 mm to 45 mm.

17. The snack food according to Claim 1, wherein the cross section of the food portion is circular, square, triangular, or elliptical.

18. The snack food according to any one of Claims 1-17, wherein the bar-like body is of a flat bar structure, one end thereof is configured to be a fixing end connected to the food portion, and the other end is configured to be a grasping end.

19. The snack food according to Claim 18, wherein the thickness direction of the bar-like body is consistent with the thickness direction of the food portion, and the maximum radial dimension of the fixing end of the bar-like body is less than the maximum radial dimension of the food portion.

20. The snack food according to Claim 18, wherein the grasping end is triangular.

21. The snack food according to Claim 18, wherein the fixing end has a hollow portion.

22. The snack food according to Claim 21, wherein one hollow portion is provided, and the hollow portion is circular.

23. The snack food according to Claim 21, wherein at least two hollow portions are provided, and the shapes of a plurality of hollow portions are combined into a specific pattern.
